# EUROPÄISCHE PATENTANMELDUNG

(11) **EP 1 248 168 A2**
(43) Veröffentlichungstag der Anmeldung: **09.10.2002**
(21) Anmeldenummer: 02006833.4
(22) Anmeldetag: 25.03.2002
(51) Int. Cl.: G05B 19/042

(54) **Verfahren und Vorrichtung zur Gewinnung von Diagnoseinformationen**

(30) Priorität: 06.04.2001 DE 10117459
(71) Anmelder: SIEMENS AKTIENGESELLSCHAFT, 80333 München (DE)
(72) Erfinder: Diezel, Matthias, 90482 Laufamholz (DE); Fritsch, Marie-Catherine, 90596 Schwanstetten (DE); Wrosch, Friedhelm, 92245 Kuemmersbruck (DE)

(57) **Zusammenfassung**

Verfahren zur Gewinnung von Diagnoseinformationen bei dem in einem Engineeringwerkzeug (4) eine Softwarekomponente (6) vorgesehen ist, die von Geräten (1a-1f) einer automatisierungstechnische Anlage (2) empfangene Statusinformationen nach vorgebbaren oder vorgegebenen Problemklassen (7a, 7b, 7c) klassifiziert und daraus eine Baumdarstellung (8) generiert.

## Beschreibung

Die Erfindung bezieht sich auf ein Verfahren sowie eine Vorrichtung zur Gewinnung von Diagnoseinformationen. Dabei werden Rückmeldungen über den Zustand einzelner Geräte einer automatisierungstechnischen Anlage so aufbereitet, dass sie den Fortschritt des Wartungs- und Inbetriebnahmeprozesses bestmöglich unterstützen.

Für die Inbetriebnahme einer automatisierungstechnischen Anlage ist es notwendig, offline erstellte Engineeringdaten in die einzelnen Geräte der Anlage zu transferieren. Eine Rückmeldung, in welchem Zustand sich die Geräte jeweils befinden, an ein Engineeringwerkzeug entscheidet dabei wesentlich über die anfallenden Inbetriebnahmezeiten. Ebenfalls ist es zur Wartung einer laufenden automatisierungstechnischen Anlage notwendig, einen schnellen Überblick über die Diagnoseinformationenen der Geräte der Anlage zu erhalten.

Die Diagnose- oder Statusinformationen über die Geräte stammen dabei aus unterschiedlichen Quellen, z.B. vom Gerät selbst oder wenn dieses - z.B. wegen unterbrochener Kommunikationsverbindung nicht antworten kann - von einer Übergeordneten Diagnoseeinrichtung, die ggf. Bestandteil des Engineeringwerkzeugs ist.

Bisher werden die Informationen über den Zustand der Geräte nicht zusammengefasst. Entsprechend den unterschiedlichen Quellen aus denen sie stammen, sind diese Informationen im Engineeringwerkzeug für jedes Gerät einzeln abfragbar. Der Benutzer des Engineeringwerkzeugs hat keinen Überblick, welche Probleme insgesamt anstehen und welche Konsequenzen für sein weiteres Vorgehen daraus zu ziehen sind.

Gemäß der Erfindung ist in das Engineeringwerkzeug eine Softwarekomponente integriert, die zu allen Geräten der Anlage eine Online-Verbindung aufnimmt. Wann immer an einem der Geräte eine Störung eintritt, wird dies der Softwarekomponente mitgeteilt. Die Softwarekomponente zeigt diese Informationen nicht einfach als Liste an, sondern klassifiziert sie in Problemklassen. Daraus wird eine Baumdarstellung erzeugt und angezeigt.

Die Knoten des Baumes entsprechen einzelnen Problemklassen, wobei z.B. in einer ersten Problemklasse Geräte, die kommunikationstechnisch nicht erreichbar sind, in einer zweiten Problemklasse Geräte, die nicht aktualisiert sind und ein Download benötigen, und in einer dritten Problemklasse Geräte, die eine interne Diagnose melden, zusammengefasst sind.

Die Blätter in diesem Baum sind die in Störung befindlichen Geräte

Die Softwarekomponente bildet außerdem die Summe der in Störung befindlichen Geräte und zeigt diese Information in der Wurzel des Baumes an.

Durch dieses Verfahren ergeben sich folgende Vorteile:
Durch die Online-Verbindung stellt die Softwarekomponente nicht einen Schnappschuss, sondern jederzeit den aktuellen Zustand der Geräte der Anlage dar.
Durch die summarische Information in der Wurzel des Baumes hat der Anwender sofort einen ersten Überblick über das Ausmaß evtl. Störungen in der Anlage.
Die Klassifizierung der Zustandsinformationen unterstützt eine typische Reihenfolge für die Behebung durch den Anwender: Probleme, die weiter oben im Baum angezeigt werden, sollten vordringlich gelöst werden.

Die Erfindung wird anhand der Figuren näher erläutert. Darin zeigt
- FIG 1: eine Prinzipdarstellung des Verfahrens zur Gewinnung von Diagnoseinformationen sowie die korrespondierende Vorrichtung,
- FIG 2: eine Darstellung einer Bildschirmansicht des Engineeringwerkzeugs, das die Erfindungsgemäße Vorrichtung beinhaltet und mit dessen Hilfe das erfindungsgemäße Verfahren ausführt und
- FIG 3: ein Layout einer Datenstruktur.

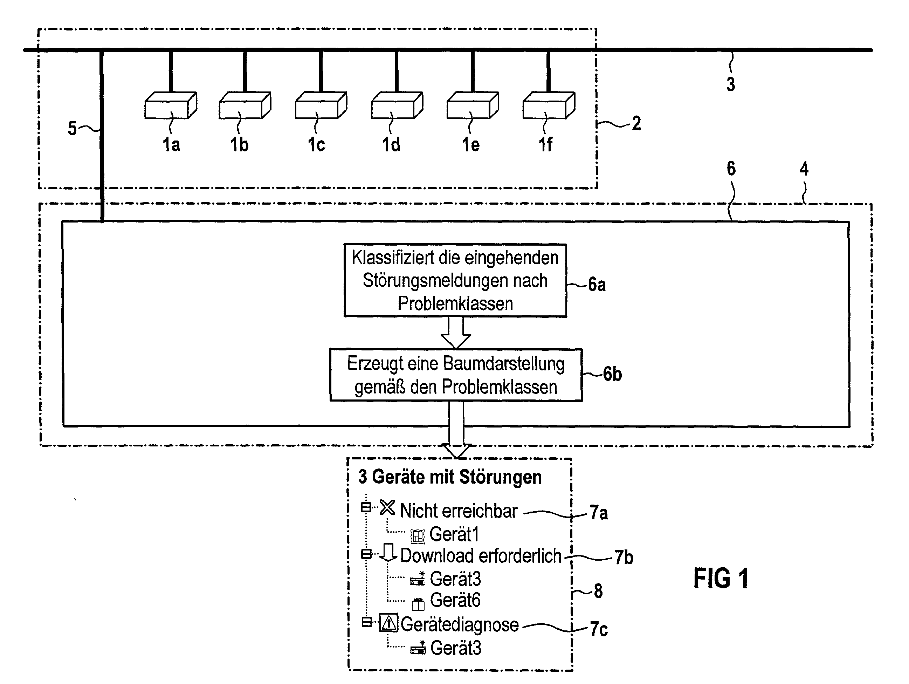

FIG 1 zeigt Geräte 1a-1f einer automatisierungstechnischen Anlage 2, die einen nicht dargestellten technischen Prozess steuert und/oder überwacht. Die einzelnen Geräte 1a-1f sind über einen Bus 3, insbesondere einen Feldbus 3, kommunikativ miteinander verbunden und tauschen über diesen Bus 3 untereinander oder mit einem Engineeringwerkzeug 4 Daten, die aus dem Prozess aufgenommen wurden (Eingabedaten), Daten zur Steuerung des Prozesses (Ausgabedaten) und Diagnosedaten, die sich auf den jeweiligen Status eines oder mehrerer der Geräte 1a-1f beziehen aus.

Das Engineeringwerkzeug 4, z.B. ein Programmiergerät mit einer entsprechenden Programmier-Software ist über eine Verbindung 5 an den Bus 3 angeschlossen, über z.B. evtl. Programmänderungen an die jeweiligen Geräte 1a-1f übermittelt werden.

Das Engineeringwerkzeug 4 umfasst eine Softwarekomponente 6, die den Datenverkehr mit den Geräten 1a-1f überwacht und auswertet.

Die Softwarekomponente 6 umfasst eine erste Komponente 6a, die eingehende Störungsmeldungen nach vorgegebenen Problemklassen 7a, 7b, 7c klassifiziert und eine zweite Komponente 6b, die aus den von der ersten Komponente generierten Daten eine Baumdarstellung 8 erzeugt.

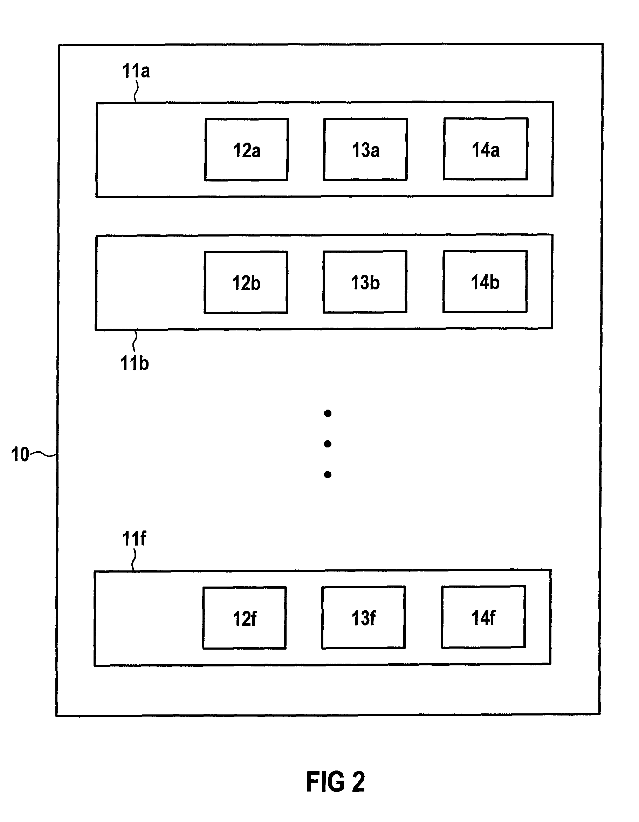

Anhand von FIG 2 wird das grundsätzlich Verfahren zur Gewinnung der Baumdarstellung 8 beschrieben.

Sollte eines oder mehrere der Geräte 1a-1f über die Verbindung 5 oder den Bus 3 nicht erreichbar sein, wird dieser Zustand registriert - z.B. nach Verstreichen einer Time-Out-Phase - und in der Softwarekomponente 6 in einer dafür vorgesehenen Datenstruktur 10 mit Bezug zu dem jeweils nicht erreichbaren Gerät 1a-1f gespeichert. Dafür umfasst die Datenstruktur 10 Unterstrukturen 11, wobei jede Unterstruktur 11a-11f einem der Geräte 1a-1f zugeordnet ist. Im einfachsten Falle ist die Datenstruktur 10 eine Matrix und die Unterstrukturen 11 die Zeilen der Matrix.

Jede Unterstruktur 11a-11f umfasst einen ersten Speicherbereich 12a-12f zur Speicherung von Informationen über die Erreichbarkeit des jeweiligen Gerätes 1a-1f. Wenn also das Gerät 1b über die Verbindung 5 bzw. den Bus 3 nicht erreichbar ist, weil das Gerät 1b ausgefallen oder die Verbindung 5 unterbrochen oder des Bus 3 gestört ist, wird in der Datenstruktur 10 in der dem Gerät 1b zugeordneten Unterstruktur 11b im ersten Speicherbereich 12b ein entsprechendes Datum hinterlegt.

Sofern die Erreichbarkeit der Geräte 1a-1f über die Verbindung 5 bzw. den Bus 3 gewährleistet ist, kann die Softwarekomponente 6 Statusmeldungen von den Geräten 1a-1f empfangen. Dies erfolgt, indem entweder die Geräte 1a-1f selbst diese Statusmeldungen zu vorgegebenen Zeitpunkten an die Softwarekomponente 6 senden oder indem die Softwarekomponente 6 die Statusmeldungen direkt bei den jeweiligen Geräten abfragt. Auch die Statusmeldungen werden in der Datenstruktur 10 gespeichert. Um die Zuordenbarkeit der empfangenen Statusmeldungen zu den jeweiligen Geräten 1a-1f zu erhalten, weist jede der Unterstrukturen 11a-11f einen zweiten Speicherbereich 13a-13f zur Speicherung von Statusmeldungen auf.

Bei der Kommunikation zwischen Engineeringwerkzeug 4 bzw. der auf diesem ablaufenden Software mit den Geräten 1a-1f wird kontinuierlich oder zu bestimmten Zeitpunkten ein Vergleich zwischen der bereits an die Geräte 1a-1f übermittelten Software und noch oder auch auf dem Engineeringwerkzeug 4 vorgehaltener Software durchgeführt. Im Falle von Abweichungen deutet dies auf das Erfordernis, die Software auf den Geräten 1a-1f zu aktualisieren - download der aktuellen Software an das Gerät - hin. Auch derartige Daten werden in der Datenstruktur 10 gespeichert. Dazu weist jede Unterstruktur einen dritten Speicherbereich 14a-14f in dem Daten zur Versionskontrolle der Software auf den Geräten 1a-1f hinterlegbar sind.

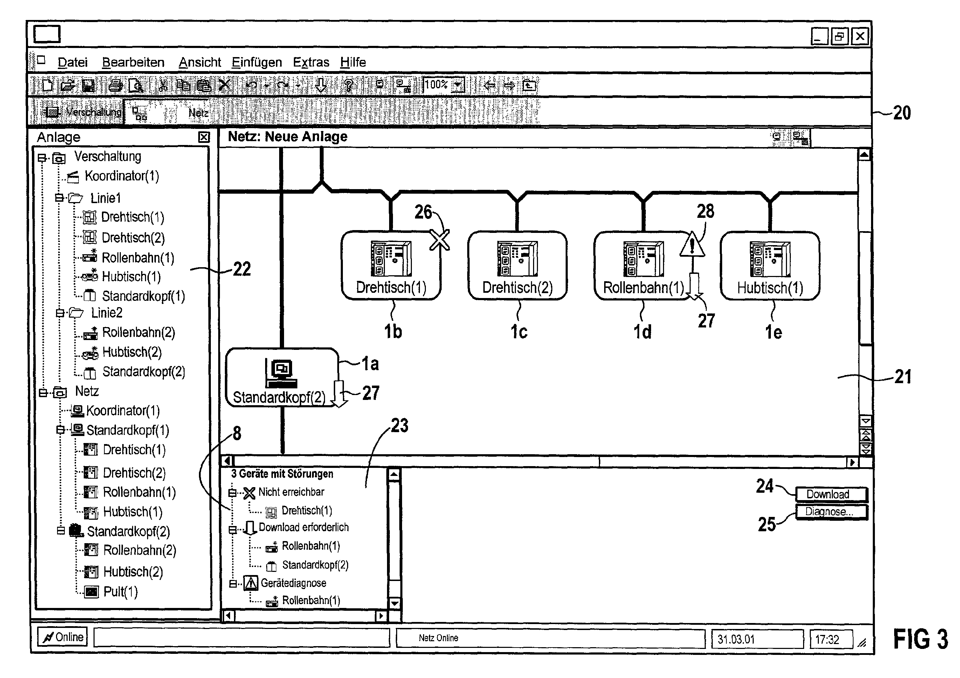

FIG 3 zeigt eine Bildschirmmaske 20 des Engineeringwerkzeugs 4. In einem ersten Anlagenfenster 21 sind die Geräte 1a-1f - oder je nach sogenanntem Fensterausschnitt zumindest ein Teil der Geräte 1a-1e - der automatisierungstechnischen Anlage schematisch dargestellt. In einem zweiten Anlagenfenster 22 erfolgt eine hierarchische Darstellung der Geräte der automatisierungstechnischen Anlage.

Die von der Softwarekomponente 6 auf den Daten der Datenstruktur 10 abgeleiteten Diagnosemeldungen werden in einem Diagnosefenster 23 als Baumstruktur 8, hierarchisch nach Problemklassen 7a, 7b, 7c geordnet, dargestellt.

Um dem Benutzer die Aktualisierung der Software auf allen Geräten 1a-1f, bei denen die jeweilige Analyse das Erfordernis eines downloads ergeben hat, zu erleichtern, ist ein erstes Bedienelement 24 vorgesehen. Bei Betätigung oder Aktivierung dieses Bedienelementes 24 wird die Software auf allen betroffenen Geräten aktualisiert.

Ein zweites Bedienelement 25 ist vorgesehen, damit der Benutzer selbst den Diagnosevorgang auslösen kann, so dass er zu jedem gewünschten Zeitpunkt das aktuelle Diagnoseergebnis vorliegen hat und nicht erst den nächsten Zeitpunkt abwarten muss, zu dem die Daten automatisch aktualisiert werden.

Neben der Baumdarstellung 8 in der die Diagnoseergebnisse nach Problemklassen sortiert dargestellt werden, sind für die Darstellung im ersten Anlagenfenster 21 graphische Symbole 26, 27, 28 vorgesehen, mit denen diejenigen Geräte 1a-1f gekennzeichnet werden, zu denen Diagnosedaten vorliegen. Der Benutzer kann anhand einer solchen Darstellung die betroffenen Geräte 1a-1f schnell in der Anlage lokalisieren und ggf. Folgefehler - wenn z.B. ein Gerät, das einen weiteren Busstrang öffnet, nicht erreichbar ist, sind auch die an diesen Busstrang angeschlossenen Geräte nicht erreichbar - erkennen. Die gleichen Symbole 26, 27, 28 werden auch in der Baumdarstellung 8 für die einzelnen Äste des Baumes 8 verwendet, wobei jeder Ast des Baumes einer Problemklasse 7a, 7b, 7c entspricht.

## Patentansprüche

1. Verfahren zur Gewinnung von Diagnoseinformationen bei dem in einem Engineeringwerkzeug (4) eine Softwarekomponente (6) vorgesehen ist, die von Geräten (1a-1f) einer automatisierungstechnische Anlage (2) empfangene Statusinformationen nach vorgebbaren oder vorgegebenen Problemklassen (7a, 7b, 7c) klassifiziert und daraus eine Baumdarstellung (8) generiert.

2. Vorrichtung zur Gewinnung von Diagnoseinformationen, mit einer Softwarekomponente (6), wobei die Vorrichtung über eine Verbindung (5) an einen Bus (3) anschließbar ist, der Geräte (1a-1f) einer automatisierungstechnischen Anlage (2) kommunikativ verbindet, und die Softwarekomponente (6) von den Geräten (1a-1f) der Anlage (2) empfangene Statusinformationen nach vorgebbaren oder vorgegebenen Problemklassen (7a, 7b, 7c) klassifiziert und Daten zu einer ersten Problemklasse (7a) in einem ersten Speicherbereich (12a-12f), Daten zu einer zweiten Problemklasse (7b) in einem zweiten Speicherbereich (13a-13f) und Daten zu einer dritten Problemklasse (7c) in einem dritten Speicherbereich (14a-14f) einer dem die jeweilige Statusinformation meldenden Gerät (1a-1r) zugeordneten Unterstruktur (11a-11f) einer Datenstruktur 10 ablegt und daraus eine Baumdarstellung (8) generiert.
